(19) Europäisches Patentamt
European Patent Office
Office européen des brevets

(11) **EP 1 447 914 B1**

(12) **EUROPÄISCHE PATENTSCHRIFT**

(45) Veröffentlichungstag und Bekanntmachung des Hinweises auf die Patenterteilung:
**04.07.2012 Patentblatt 2012/27**

(51) Int Cl.:
***H04B 1/707*** *(2011.01)*

(21) Anmeldenummer: **03002483.0**

(22) Anmeldetag: **05.02.2003**

(54) **Erfassung von Datenübertragungspfaden**

Detection of data transmission paths

Détection de voies de transmissions de données

(84) Benannte Vertragsstaaten:
**DE FR GB IT**

(43) Veröffentlichungstag der Anmeldung:
**18.08.2004 Patentblatt 2004/34**

(73) Patentinhaber: **Intel Mobile Communications Technology GmbH**
**85579 Neubiberg (DE)**

(72) Erfinder:
• **Zimmermann, Manfred**
**81539 München (DE)**
• **Canonici, Jean-Xavier**
**06110 Le Cannet (FR)**
• **Bottero, Mauro**
**06250 Mougins Le Haut (FR)**
• **Bilgic, Attila**
**85551 Kirchheim (DE)**

(74) Vertreter: **Isarpatent**
**Patent- und Rechtsanwälte**
**Postfach 44 01 51**
**80750 München (DE)**

(56) Entgegenhaltungen:
**EP-A- 0 989 685    EP-A- 1 148 657**
**EP-A- 1 170 876**

• **BEJJANI ET AL.: "Adaptive channel delays selection for WCDMA mobile system" IEEE VEHICULAR TECHNOLOGY CONFERENCE, 19. - 22. September 1999, Seiten 203-207, XP010352949 New York, US**
• **ELDERS-BOLL: "Simplified interference-based threshold rule for delay selection in DS-CDMA systems" IEEE INTERNATIONAL SYMPOSIUM ON PERSONAL INDOOR AND MOBILE RADIO COMMUNICATIONS, 18. - 22. September 2000, Seiten 77-81, XP010520607 New York, US**
• **MIYATANI ET AL.: "A reduced-complexity path timing detection method for DS-CDMA" IEEE INTERNATIONAL CONFERENCE COMMUNICATIONS , 5. - 9. Oktober 1998, Seiten 357-361, XP010314885 New York, US**

**Beschreibung**

Die vorliegende Erfindung betrifft eine Vorrichtung zur Datenübertragungspfad-Erfassung und ein Verfahren zur Finger-Platzierung in einem Rake-Empfänger, und betrifft insbesondere eine Vorrichtung zum Empfang eines über mindestens einen Datenübertragungspfad übertragbaren Datenstroms, wobei Datenübertragungspfade in Abhängigkeit von einem Fingerplatzierungssignal eingestellt werden.

CDMA-Datenübertragungssysteme, beispielsweise zur Verwendung in einer 3GPP-WCDMA-FDD-Einrichtung, weisen meist einen sogenannten "Rake"-Empfänger auf, welcher aus unterschiedlichen "Fingern" besteht, wobei jeder Finger einem verzögerten Pfad (Datenübertragungspfad) empfangenen Signals zugeordnet wird.

Die Anzahl der aktiven Finger und die Verzögerung in jedem "Finger" in einem Rake-Empfänger werden auf der Basis einer Datenübertragungspfad-Sucheinheit zugeordnet. Die Betriebsparameter der Datenübertragungspfad-Sucheinheit werden durch eine "Finger"-Verwaltungseinheit zugeordnet.

In drahtlosen Datenstromübertragungssystemen laufen Signale über unterschiedliche Datenübertragungspfade, welche mit einem unterschiedlichen "Fading" beaufschlagt sein können.

Da jeder Datenübertragungspfad eine unterschiedliche Länge aufweist und sich die Datenstromsignale auf den unterschiedlichen Pfaden mit ungefähr der gleichen Datenübertragungsgeschwindigkeit ausbreiten, unterscheiden sich die Datenstromsignal-Ankunftszeiten am Datenstromempfänger für die unterschiedlichen Datenübertragungspfade zum Teil erheblich.

Die Datenübertragungspfad-Sucheinheit dient nun dazu, eine Ankunftszeit der Datenstromsignale von den unterschiedlichen Datenübertragungspfaden zu bestimmen. Gemäß dem 3GPP-Standard (UMTS) ist der Datenstrom aus Rahmen und Schlitzen (Datenrahmen und Datenschlitzen) aufgebaut. Ein Datenrahmen weist beispielsweise eine Zeitdauer von 10 Millisekunden (ms) auf und enthält 15 Datenschlitze. Jeder Datenschlitz weist 2560 Chips auf, was bedeutet, dass die Chipfrequenz in diesem Beispiel 3,84 MHz beträgt.

Da die Bandbreite eines CDMA-Systems üblicherweise groß ist, ist eine Chip-Periode sehr klein, so dass Verzögerungen unterschiedlicher Datenübertragungspfade üblicherweise größer als eine Chip-Periode sind.

Diese verzögerten Ankunftszeiten der verschiedenen Ausbreitungspfade führen zu einer Überlagerung zu verschiednen Zeitpunkten ausgesandter Datensymbole am Empfänger, ein Effekt der als Inter-Symbol-Interferenz (ISI) bezeichnet wird und sich ohne geeignete Gegenmaßnahmen nachteilig auf den Datenempfang auswirkt. Zur Kompensation der ISI und zur vorteilhaften Ausnützung der Diversität der verschiedenen Ausbreitungspfaden wird bei CDMA Systemen üblicherweise eine Technik eingesetzt, mit welcher die Datenstromsignale sämtlicher relevanten Datenübertragungspfade getrennt empfangen werden, wobei diese dann kombiniert werden.

Dies wird nach dem Stand der Technik in einem Rake-Empfänger durchgeführt, der ein Datenstromempfänger ist, welcher so viele Multipfad-Datenstromsignale wie möglich empfängt. Der Rake-Empfänger kombiniert die Signale von sämtlichen dieser Pfade, um ein möglichst "störungsfreies" Datenstromsignal zu erzeugen, das stärker als die einzelnen Komponenten ist. Einzelne Pfade werden durch ein Kreuz-Korrelieren eines Referenzmusters mit dem empfangenen Signal gefunden.

Die Abschätzung von sogenannten Energieverzögerungsprofilen (PDP = Power Delay Profile) ist für die Funktionsfähigkeit eines Rake-Empfängers wesentlich. Eine Abschätzung der Energieverzögerungsprofile unterschiedlicher Datenübertragungspfade wird z.B. durch einen mobilen UMTS-Empfänger durchgeführt, um die Amplitude bzw. eine Energie und die verzögerte Zeitgebung der Datenübertragungspfade von Datenströmen bezüglich einer Empfänger-Zeitgebungsreferenz zu bestimmen.

Die Energieverzögerungsprofil-Bestimmung wird durch eine Korrelation unter Verwendung eines sogenannten (primären oder sekundären) Pilotkanals (CPICH = Common Pilot Channel) durchgeführt, der eine vorbestimmte Symbolsequenz überträgt. In herkömmlicher Weise wird eine komplexe Korrelation des eingehenden Signals ($r(i)$), das bei der doppelten Chip-Rate abgetastet wird, mit einem bekannten, konjugiert komplexen Pilotsequenzsignal $p^*(i)$, ebenfalls mit der doppelten Chipfrequenz abgetastet, gemäß der allgemeinen Beziehung bereitgestellt, wobei $N_{corr}$ die Korrelationslänge darstellt.

$$\underline{corr}_{compl}(n) = \frac{1}{N_{corr}} \sum_{i=0}^{N_{corr}-1} \underline{r}(2i+n) \cdot \underline{p}^*(2i) \quad n = 0,1,2,...,\frac{L-1}{20}$$

Im Falle der im UMTS-Standard möglichen Übertragungsdiversität muss diese Korrelation für die Datenübertragungspfade einer "Antenne 1" und einer "Antenne 2" durchgeführt werden. Hierbei bezeichnen die Ausdrücke "Antenne 1" und "Antenne 2" zwei unterschiedliche Sendeeinrichtungen in einem Datenstromsender, beispielsweise Antennen, so dass mindestens zwei unterschiedliche Datenübertragungspfade entstehen. Die Korrelationslänge $N_{corr}$ ist hierbei ein geradzahliges Vielfaches einer Pilotsequenz-Symbollänge, d.h. ein geradzahliges Vielfaches einer CPICH-Symbollänge von 256 Chips. Eine Erhöhung der Korrelationslänge $N_{corr}$ erhöht zwar in wünschenswerter Weise das Signal-zu-Rauschverhältnis bei einer Energieverzögerungsprofil-Abschätzung, auf der anderen Seite wird diese Energieverzögerungsprofil-Abschätzung dann empfindlicher auf einen Abtasttaktfehler. Aus diesem Grund muss eine Energieverzögerungsprofil-Abschätzung über der Zeit gemittelt werden.

Die Funktionsfähigkeit des Rake-Empfängers basiert ganz wesentlich auf einer korrekten Platzierung einer bestimmten Anzahl von Rake-Fingern auf mehrfache Datenübertragungspfade, um deren Energie kombinieren zu können und eine Diversitätsverstärkung zu erzielen.

Herkömmliche Verfahren setzen eine sogenannte PDP-(PDP, Power Delay Profile, Energieverzögerungsprofil) Bestimmungseinrichtung ein, um diejenigen Datenübertragungspfade mit der größten Energie zu bestimmen. Der Ausgang jeder PDP-Bestimmungseinrichtung wird mit einem Schwellenwert verglichen, und sämtliche Spitzenwerte des Empfangssignals oberhalb dieser Schwelle werden durch einen Finger-Platzierungsblock weiterverarbeitet.

In nachteiliger Weise ist die Einstellung eines Schwellenwerts äußerst kritisch bezüglich der Erfassung falscher Datenübertragungspfade. Insbesondere in Umgebungen mit einem niedrigen Signal-zu-Rauschverhältnis bzw. einem hohen Rauschen, das insbesondere aufgrund von Fading-Effekten durch einen sich bewegenden, mobilen Datenstromempfänger hervorgerufen werden kann, können sich die Amplitudenverteilungen von Rauschen und Amplitudenverteilungen von Datenübertragungspfaden derart überlappen, dass eine exakte Einstellung eines Schwellenwerts nicht mehr möglich ist.

In herkömmlicher Weise ist die PDP-Bestimmungseinrichtung beispielsweise als ein Korrelationsfilter ausgeführt, welches den weiteren Nachteil besitzt, dass Nebenmaxima erzeugt werden, welche ungültige Datenübertragungspfade, d.h. Schatten-Datenübertragungspfade vortäuschen.

Wird der Schwellenwert zu niedrig eingestellt, so wird eine Energieverzögerungsprofilbestimmung durch Rauschen stark gestört, und nicht sämtliche Spitzenwerte, welche mit einer Korrelation von Empfangssignal und Pilotsequenzsignal verknüpft sind, entsprechen wirklichen, d.h. gültigen Datenübertragungspfaden.

In nachteiliger Weise sind die Spitzenwerte des Nutzsignals und des Rauschsignals statistischen Prozessen unterworfen, so dass eine Beziehung zwischen Datenübertragungspfaden und Rausch-Spitzenwerten bei einer Energieverzögerungsprofilbestimmung ein statistischer Prozess ist, der von einem vorhandenen Rausch-Szenario abhängt.

Insbesondere weisen herkömmliche Verfahren Nachteile dahingehend auf, dass Datenübertragungspfade nicht korrekt erkannt werden, wenn, wie bei mobilen Systemen unumgänglich, neue Datenübertragungspfade erscheinen und vorhandenen Datenübertragungspfade verschwinden, so dass ein gleichmäßiges Überwachen der Datenübertragungspfade notwendig ist.

Die Veröffentlichung "BEJJANI ET AL.: "Adaptive channel delays selection for WCDMA mobile system" IEEE VEHICULAR TECHNOLOGY CONFERENCE, 19.-22. September 1999, Seiten 203-207" beschreibt ein adaptives Kanalverzögerungs-Auswahlverfahren für WCDMA-Mobilsysteme, wobei gezeigt wird, wie an Stelle eines festen Schwellenwerts zur Übertragungspfad-Auswahl ein adaptiv eingestellter Schwellenwert eingesetzt werden kann.

In der Publikation "ELDERS-BOLL: "Simplified interferencebased threshold rule for delay selection in DS-CDMA systems" IEEE INTERNATIONAL SYMPOSIUM ON PERSONAL INDOOR AND MOBILE RADIO COMMUNICATIONS, 18-22.September 2000, Seiten 77-81" ist ein zuverlässiges Übertragungspfad-Auswahlverfahren vor einem Prozessschritt eines Maximalverhältnis-Kombinierens offenbart, wobei eine Schwellenwert-Regel angegeben wird. Diese Schwellenwert-Regel basiert in nachteiliger Weise nicht auf einer zusätzlichen Schleife über sämtliche Mehrfachpfad-Komponenten und bewirkt keine Berechnung der Standardabweichung.

Die Publikation "MIYATANI ET AL.: "A reduced-complexity path timing detection method for DS-CDMA" IEEE INTERNATIONAL CONFERENCE COMMUNICATIONS, 5.-9. Oktober 1998, Seiten 357-361" zeigt Schaltungsanordnungen zur Ausgabe von Schwellenwerten. Signale, die über unerwünschte Datenübertragungspfade übertragen werden, können jedoch nicht unterdrückt werden.

Es ist daher eine Aufgabe der vorliegenden Erfindung, eine Vorrichtung zum Empfang eines über mindestens einen Datenübertragungspfad übertragbaren Datenstroms bereitzustellen, bei der eine Genauigkeit einer Datenübertragungspfad-Erfassung gegenüber herkömmlichen Verfahren verbessert ist, wobei Rausch-Spitzenwerte von Datenübertragungspfad-Spitzenwerten unterschieden und Schatten-Datenübertragungspfade vermieden werden können.

Diese Aufgabe wird erfindungsgemäß durch eine Vorrichtung mit den Merkmalen des Patentanspruchs 1 gelöst.

Ferner wird die Aufgabe durch ein im Patentanspruch 8 angegebenes Verfahren gelöst.

Weitere Ausgestaltungen der Erfindung ergeben sich aus den Unteransprüchen.

Ein wesentlicher Gedanke der Erfindung bestehet darin, eine Datenübertragungspfad-Erfassung basierend auf einem dreistufigen Schwellenwert-Einstellverfahren durchzuführen, wobei eine Spitzenwert-Erfassungseinrichtung und eine Datenübertragungspfadprofil-Bestimmungseinrichtung derart zusammenwirken, dass Spitzenwerte in Abhängigkeit von einem an die Rauschumgebung adaptierbaren Schwellenwerts bestimmt werden und in einer weiteren Stufe mittels einer Filterungseinrichtung durch den Korrelationsfilter hervorgerufene Nebenmaxima unterdrückt werden, um Schatten-Datenübertragungspfade zu vermeiden.

Der Vorteil der Erfindung besteht somit darin, dass unterschiedliche Signal-zu-Rausch-Szenarios vorhanden sein können, an welche sich die erfindungsgemäße Vorrichtung anpassen kann.

Zweckmäßig wird hierdurch die Erfassungswahrscheinlichkeit von gültigen Datenübertragungspfaden erhöht, während eine Wahrscheinlichkeit einer Erfassung von ungültigen Datenübertragungspfaden verglichen mit Verfahren nach dem Stand der Technik verringert wird.

Es ist ein weiterer Vorteil, dass die Einstellung eines Schwellenwerts verglichen mit dem Stand der Technik nicht mehr kritisch ist, da der Schwellenwert automatisch an eine Rauschumgebung angepasst wird.

Vorteilhaft ist es weiterhin, dass unterschiedliche Schwellenwerte bereitgestellt werden, welche eine Spitzenwert-Erfassung, eine Datenübertragungspfadprofil-Bestimmung und eine Schatten-Datenübertragungspfadfilterung gestatten.

Insbesondere ist es zweckmäßig, dass die Schwellenwerte an unterschiedliche Umgebungsszenarien adaptierbar sind, falls eine Information über die Umgebungsszenarien verfügbar ist.

Vorteilhaft kann die erfindungsgemäße Vorrichtung in einem CDMA-Modem implementiert werden.

Die erfindungsgemäße Vorrichtung zum Empfang eines über mindestens einen Datenübertragungspfad übertragbaren Datenstroms weist im Wesentlichen auf:

a) einen Datenstromempfänger zum Empfang des Datenstroms;

b) eine Energieverzögerungsprofil-Bestimmungseinheit zur Bestimmung mindestens eines Energieverzögerungsprofils;

c) eine Spitzenwert-Erfassungseinrichtung zur Erfassung mindestens eines Spitzenwerts in dem Energieverzögerungsprofil;

d) eine Datenübertragungspfadprofil-Bestimmungseinrichtung zur Bestimmung eines Datenübertragspfadprofils des mindestens einen Datenübertragungspfads;

e) eine Filterungseinrichtung zur Unterdrückung von Schattenpfadsignalen und zur Ausgabe eines Fingerplatzierungssignals; und

f) eine Einstelleinrichtung zur Einstellung von Datenübertragungspfaden, welche einer Datenübertragung zugeordnet sind, in Abhängigkeit von dem Fingerplatzierungssignal.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung weist die Spitzenwert-Erfassungseinrichtung eine Vergleichseinheit auf, um das Energieverzögerungsprofil mit einem ersten Schwellenwert zu vergleichen.

Gemäß einer weiteren bevorzugten Weiterbildung der vorliegenden Erfindung ist eine Energieverzögerungsprofil-Bestimmungseinheit zur Bestimmung mindestens eines Energieverzögerungsprofils des mindestens einen Datenübertragungspfads bereitgestellt.

Gemäß noch einer weiteren bevorzugten Weiterbildung der vorliegenden Erfindung ist eine Summationseinheit zur Summation der von einzelnen Datenübertragungspfaden übertragenen Datenströme bereitgestellt.

Gemäß noch einer weiteren bevorzugten Weiterbildung der vorliegenden Erfindung weist die Spitzenwert-Erfassungseinrichtung eine Schwellenwert-Einstelleinheit auf, mit welcher der erste Schwellenwert adaptiv einstellbar ist.

Gemäß noch einer weiteren bevorzugten Weiterbildung der vorliegenden Erfindung weist die Datenübertragungspfadprofil-Bestimmungseinrichtung eine Datenübertragungspfadprofileinheit zur Aufsummation von gewichteten Spitzenwerten und eine Datenübertragungspfaderfassungseinheit zur Erfassung eines gültigen Datenübertragungspfads auf.

Gemäß noch einer weiteren bevorzugten Weiterbildung der vorliegenden Erfindung ist die Energieverzögerungsprofil-Bestimmungseinheit zusammen mit einer Spitzenwert-Sortiereinheit in einem gemeinsamen angepassten Hardware-Block bereitgestellt.

Gemäß noch einer weiteren bevorzugten Weiterbildung der vorliegenden Erfindung ist eine Empfangssignalstärke-Bestimmungseinheit zur Bestimmung der Empfangssignalstärke des Empfangssignals in einem angepassten Hardware-Block bereitgestellt.

Ferner weist das erfindungsgemäße Verfahren zum Empfangen eines über mindestens einen Datenübertragungspfad übertragenen Datenstroms die folgenden Schritte auf:

a) Empfangen des Datenstroms über den mindestens einen Datenübertragungspfad in einem Datenstromempfänger;

b) Bestimmen mindestens eines Energieverzögerungsprofils mittels einer Energieverzögerungsprofil-Bestimmungseinheit;

c) Erfassen mindestens eines Spitzenwerts in dem bestimmten Energieverzögerungsprofil mittels einer Spitzenwert-Erfassungseinrichtung;

d) Bestimmen eines Datenübertragungspfadprofils des mindestens einen Datenübertragungspfads in einer Datenübertragungspfadprofil-Bestimmungseinrichtung;

e) Unterdrücken von Schattenübertragungspfadsignalen und Ausgeben eines Fingerplatzierungssignals durch eine Filterungseinrichtung; und

f) Einstellen von Datenübertragungspfaden, welche einer Datenübertragung zugeordnet werden, in Abhängigkeit von dem Fingerplatzierungssignal mittels einer Einstelleinrichtung.

Als "Schattenübertragungspfad" wird hierbei ein Übertragungspfad bezeichnet, welcher ungültig ist, d.h. welcher zu einer Datenübertragung des zu übertragenden Datenstroms nicht beiträgt. Ein Schattenübertragungspfad kann beispielsweise durch Nebenmaxima eines Korrelationsfilters, welcher in einer Energieverzögerungsprofil-Bestimmungseinheit enthalten ist, vorgetäuscht werden.

Gemäß noch einer weiteren bevorzugten Weiterbildung der vorliegenden Erfindung wird in der Spitzenwert-Erfassungseinrichtung ein erster Schwellenwert variabel eingestellt.

In vorteilhafter Weise wird gemäß des erfindungsgemäßen Verfahrens der erste Schwellenwert in Abhängigkeit von einer Rauschumgebung eingestellt.

Weiterhin ist es vorteilhaft, dass der erste Schwellenwert in Abhängigkeit von einem Mittelwert, einer Varianz und/oder einer Standardabweichung von Rausch-Spitzenwerten eingestellt wird.

Gemäß noch einer weiteren bevorzugten Weiterbildung der vorliegenden Erfindung wird der erste Schwellenwert an eine Rauschumgebung derart angepasst, dass in vorteilhafter Weise eine Vorauswahl möglicher Datenübertragungspfad-Positionen bereitgestellt wird.

Gemäß noch einer weiteren bevorzugten Weiterbildung der vorliegenden Erfindung werden die Energieverzögerungsprofilschätzung und die Spitzenwerterfassung durch die Spitzenwert-Erfassungseinrichtung periodisch ausgeführt.

In vorteilhafter Weise lässt es die vorliegende Erfindung zu, dass die Energieverzögerungsprofilschätzung und die Spitzenwerterfassung durch die Spitzenwert-Erfassungseinrichtung in einem zeitlichen Abstand, der einem Datenrahmen oder einem Vielfachen von Datenrahmen entspricht, periodisch ausgeführt werden.

Gemäß noch einer weiteren bevorzugten Weiterbildung der vorliegenden Erfindung wird eine vorgebbare Anzahl von vorangehenden Perioden der Datenübertragungspfadprofil-Bestimmungseinrichtung abgespeichert, wobei die erfassten Spitzenwerte bevorzugtermaßen nach Art eines laufenden Histogramms aufsummiert werden. Es ist weiterhin zweckmäßig, dass die Datenübertragungspfadprofil-Bestimmungseinrichtung die vorgebbare Anzahl von vorangehenden Perioden abspeichert und die erfassten Spitzenwerte vor einer Aufsummierung mit einer Empfangssignalstärke gewichtet.

Gemäß noch einer weiteren bevorzugten Weiterbildung der vorliegenden Erfindung entsprechen die zeitlichen Summationsstellen bei einer Aufsummierung der erfassten Spitzenwerte durch die Datenübertragungspfadprofil-Bestimmungseinrichtung Verzögerungspositionen k = 0,1,...,L-1 einer Korrelationsfunktion.

Gemäß noch einer weiteren bevorzugten Weiterbildung der vorliegenden Erfindung werden diejenigen Datenübertragungspfadpositionen, die weniger als eine vorbestimmte Anzahl von Malen auftreten, auf 0 gesetzt.

Gemäß noch einer weiteren bevorzugten Weiterbildung der vorliegenden Erfindung wird in der Datenübertragungspfadprofil-Bestimmungseinrichtung ein zweiter Schwellenwert vorgegeben, mit welchem die nach Art eines laufenden Histogramms aufsummierten Spitzenwerte verglichen werden.

Gemäß noch einer weiteren bevorzugten Weiterbildung der vorliegenden Erfindung wird der zweite Schwellenwert in Abhängigkeit von einem vorhandenen Rauschen bzw. einer vorhandenen Rauschumgebung bzw. einem existierenden Rausch-Szenario eingestellt.

Gemäß noch einer weiteren bevorzugten Weiterbildung der vorliegenden Erfindung wird der zweite Schwellenwert in Abhängigkeit von dem ersten Schwellenwert, welcher mit einem konstanten Faktor multipliziert wird, bereitgestellt.

Gemäß noch einer weiteren bevorzugten Weiterbildung der vorliegenden Erfindung werden Nebenmaxima eines Korrelationsfilters in der Filterungseinrichtung zur Unterdrückung von Schattenübertragungspfadsignalen mit einem dritten Schwellenwert verglichen.

Gemäß noch einer weiteren bevorzugten Weiterbildung der vorliegenden Erfindung werden die ersten, zweiten und/oder dritten Schwellenwerte periodisch aktualisiert.

Ausführungsbeispiele der Erfindung sind in den Zeichnungen dargestellt und in der nachfolgenden Beschreibung näher erläutert. In den Zeichnungen zeigen:

Fig. 1    ein schematisches Blockdiagramm eines Datenübertragungssystems mit mehrfachen Datenübertragungspfaden;

Fig. 2    einen schematischen Aufbau eines Pilotkanals, über welchen ein Pilotsequenzsignal, das eine vorgegebene Symbolsequenz aufweist, übertragbar ist;

Fig. 3    ein Blockbild eines Rake-Empfängers mit Einrichtungen zur Datenübertragungspfaderfassung und Fingerplatzierung;

Fig. 4    ein Diagramm, das Spitzenwerte des Nutzsignals (Datenübertragungssignals) und von Rauschsignalen in Bezug zu einem Schwellenwert darstellt, welcher zur Bestimmung von Energieverzögerungsprofilen eingestellt wird;

Fig. 5    ein Blockbild eines Ausführungsbeispiels des erfindungsgemäßen Verfahrens;

Fig. 6    ein bevorzugtes Ausführungsbeispiel gemäß der vorliegenden Erfindung;

Fig. 7    ein weiteres bevorzugtes Ausführungsbeispiel gemäß der vorliegenden Erfindung; und

Fig. 8    noch ein weiteres bevorzugtes Ausführungsbeispiel gemäß der vorliegenden Erfindung.

In den Figuren bezeichnen gleiche Bezugszeichen gleiche oder funktionsgleiche Komponenten oder Schritte.

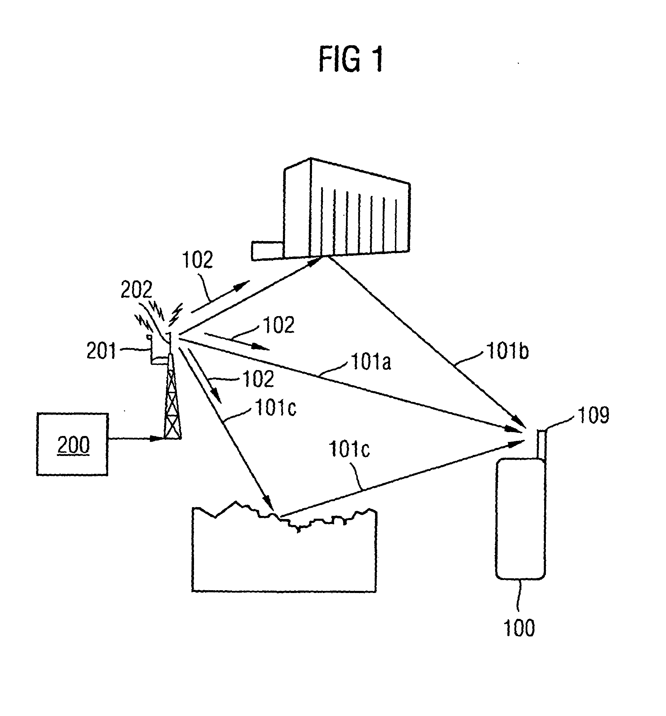

Fig. 1 zeigt ein schematisches Blockbild eines Datenübertragungssystems, bei welchem unterschiedliche Datenübertragungspfade 101, nämlich direkte Datenübertragungspfade 101a und indirekte Datenübertragungspfade 101b, 101c zu einer Übertragung eines Datenstroms 102 beitragen.

Es existiert ein direkter Datenübertragungspfad 101a und Datenübertragungspfade, welche über Reflexionen an Gebäuden, Erhebungen und sonstigen Einrichtungen etc. laufen, wie beispielsweise die Datenübertragungspfade 101b und 101c. Ein Datenstromsender 200 weist hierbei typischerweise eine oder zwei Sendeeinrichtungen (Antennen) 201 und 202 auf, während ein Datenstromempfänger 100 eine Empfangseinrichtung 109aufweist.

Wie aus dem Blockbild der Fig. 1 ersichtlich, sind die Laufzeiten auf den den Datenstrom 102 übertragenden Datenübertragungspfaden 101a-101c unterschiedlich. In einem "worst-case" beträgt die Verzögerungszeit typischerweise 30 $\mu$s, was einer Entfernungsdifferenz von 9 km entspricht. Diese "worst-case"-Verzögerungszeit ist durch Testfälle in dem 3GPP-Standard spezifiziert. Um ein Energieverzögerungsprofil zu berechnen, ist eine Anzahl L von Werten notwendig, die für diesen "worst-case" auf L = 240 eingestellt ist.

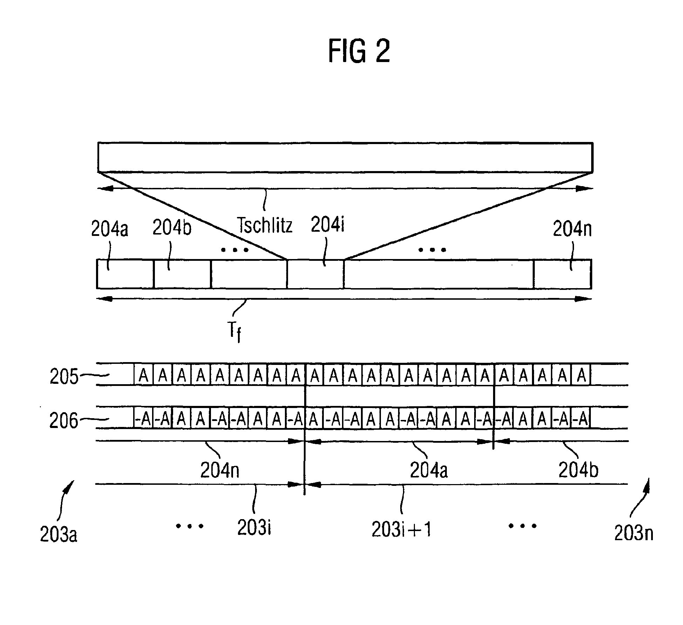

Fig. 2 zeigt schematisch den Aufbau eines Pilotkanals mit einer vorgegebenen Pilotsequenz. Wie gezeigt, ist ein Datenstrom aus einzelnen Datenrahmen 203a ...203i...203N aufgebaut. Jeder Datenrahmen weist in dem erfindungsgemäßen Ausführungsbeispiel eine Zeitdauer von $T_f$ = 10 ms (Millisekunden) auf. Jeder Datenrahmen ist in einzelne Schlitze 204a...204i...204n unterteilt.

In dem erfindungsgemäßen Ausführungsbeispiel ist ein Datenrahmen in n=15 Schlitze unterteilt. In jedem Schlitz werden 10 Symbole übertragen, welche in Fig. 2 durch A bzw. -A bezeichnet sind. Die für eine erste Antenne 1 bzw. eine erste Sendeeinrichtung 201 unter dem Bezugszeichen 205 angegebenen ersten Symbole bzw. die für eine zweite Antenne 2 bzw. eine zweite Sendeeinrichtung 202 unter dem Bezugszeichen 206 angegebenen zweiten Symbole für einen spezifischen Schlitz bilden ein Pilotsequenzsignal mit einer vorgebbaren Pilotsequenz.

Ein Symbol ist in dem Ausführungsbeispiel aus 256 Chips aufgebaut, wobei ein Chip eine kleinste digitale Einheit darstellt. Dies bedeutet, dass ein Zeitschlitz $T_{schlitz}$ aus 2560 Chips besteht, wobei bei einer Bereitstellung von 2 Bit pro Symbol - für Real- und Imaginärteil, d.h. (1+j) - für jeden einen Schlitz 204a-204n 20 Bit bereitgestellt werden.

Bei der angegebenen Zeitdauer eines Datenrahmens 203 und der vorgegebenen Anzahl von 15 Schlitzen, welche jeweils 10 Symbole bzw. 2560 Chips enthalten, ergibt sich eine Chip-Rate von 3,84 Mchip/s. Zur Bildung von Korrelationsfunktionen wird der Datenstrom nun mit der doppelten Chip-Rate, d.h. mit $7,68 \times 10^6$ Abtastschritten pro Sekunde abgetastet.

Hiermit wird eine Korrelationsfunktion mit einer Auflösung eines halben Chips bestimmbar. In vorteilhafter Weise wird eine Korrelationslänge $N_{corr}$ auf ein Vielfaches der Symbollänge (x1, x2, x4 ...) eingestellt.

Die in der obigen Gleichung angegebene Größe L bezeichnet damit eine maximale Verschiebung bei der Bildung der Korrelationsfunktionen, d.h. n läuft von 0, 1, 2 ... L-1. Wird L gleich 240 gesetzt, ergibt sich eine auch für den "worstcase" ausreichende Verzögerungszeit von 31,25 μs.

Gemäß der obigen Gleichung ergeben sich sowohl für eine Antenne 1 als auch für eine Antenne 2, d.h. Sendeeinrichtungen 201 bzw. 202 unterschiedliche Korrelationsfunktionen als Funktion von n, wobei zur Bestimmung eines gesamten Energieverzögerungsprofils die Summe der Betragsquadrate der einzelnen Korrelationsfunktionen gebildet wird.

Auf diese Weise wird ein Energieverzögerungsprofil PDP als Funktion von n erhalten zu

$$\underline{X}_{Ant1}(n) = \sum_{i=0}^{Ncorr-1} \underline{r}(n+2i) \cdot \underline{p}^*{}_{Ant1}(2i) \qquad (1)$$

$$\underline{X}_{Ant2}(n) = \sum_{i=0}^{Ncorr-1} \underline{r}(n+2i) \cdot \underline{p}^*{}_{Ant2}(2i) \qquad (2)$$

$$PDP(n) = |\underline{X}_{Ant1}(n)|^2 + |\underline{X}_{Ant2}(n)|^2 \qquad (3)$$

In den Gleichungen (1) bis (3) ist das empfangene, komplexe Signal (Empfangssignal) jeweils mit $\underline{r}(n)$ bezeichnet, während $\underline{p}(i)$ das komplexe Pilotsignal bezeichnet, wobei r(n) und p(i) jeweils mit der doppelten Chiprate abgetastet sind.

Hierbei ist die Verschiebung durch n = 0, 1, 2 ... L-1 angegeben.

Das Energieverzögerungsprofil PDP ergibt sich somit durch die Summe der Betragsquadrate gemäß Gleichung (3) und ist als PDP(n) bezeichnet. Die Energieverzögerungsprofil-Bestimmung muss nun über mehrere Blöcke einer Korrelationslänge $N_{corr}$ gemittelt werden. $N_{avg}$ bezeichnet eine Anzahl von Blöcken, über welche gemittelt wird, wobei die Größe $N_{avg}$ in Abhängigkeit von den Netzbedingungen variieren kann.

Gemäß dem erfindungsgemäßen Beispiel ist nun die Korrelationslänge $N_{corr}$ und die Anzahl von Mittelungen $N_{avg}$ veränderbar, ohne Hardware-Auslegungen verändern oder anpassen zu müssen.

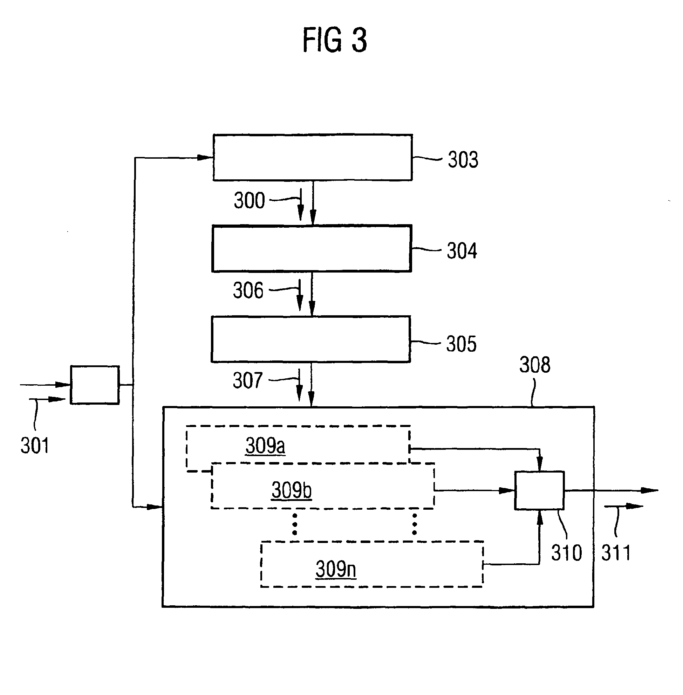

Fig. 3 zeigt einen Rake-Empfänger, der als ein Datenstromempfänger zum Empfangen eines über mindestens einen Datenübertragungspfad übertragbaren Datenstroms 102 dient. Der Rake-Empfänger besteht aus einer Energieverzögerungsprofil-Bestimmungseinheit 303, mit welcher ein Energieverzögerungsprofil 300 (PDP = Power Delay Profile, Energieverzögerungsprofil) bestimmt wird.

Weiterhin weist der Rake-Empfänger eine Datenübertragungspfad-Erfassungseinheit 304, eine Einstelleinrichtung 305 und eine Verarbeitungseinrichtung 308 auf. Die wesentlichen Komponenten der Verarbeitungseinrichtung 308 umfassen eine Summationseinheit 310, welche unterschiedliche Rake-Finger 309a-309n aufsummiert, um Datenübertragungspfade 101, 101a-101c festzulegen, welche zur Übertragung des Datenstroms 102 geeignet sind.

Der Rake-Empfänger erhält die über den Datenstrom 102 übertragenen Daten als Empfangssignal 301.

Das Empfangssignal wird dann in der Energieverzögerungsprofil-Bestimmungseinheit, wie bereits beschrieben, mit einem Pilotsequenzsignal korreliert, wobei die Korrelationsfunktion zur Bestimmung eines Energieverzögerungsprofils als Funktion von (k), d.h. die Größe $pdp_{est}(k)$ die folgende Form aufweist:

$$pdp_{est}(k) = \frac{1}{N_{avg}} \cdot \frac{1}{N^2_{corr}} \cdot \sum_{\ell=0}^{N_{avg}-1} \left| \sum_{n=n_{start}+\ell \cdot N_{corr}}^{n_{start}+(\ell+1)N_{corr}-1} r(2n+k) \cdot p^*(2n) \right|^2$$

$$\text{mit } k = 0,1,\ldots,L-1 \qquad (4),$$

hierbei ist das Empfangssignal 301 mit r(n) und das Pilotsequenzsignal mit p(k) bezeichnet, wobei die beiden Signale komplexe Größen darstellen und gemäß der folgenden Gleichungen (5) und (6) vorgegeben sind:

$$r(n) = r_s(n) + jr_Q(n) \qquad\qquad (5)$$

$$p(n) = p_s(n) + jp_Q(n) \qquad\qquad (6)$$

$N_{corr}$ bezeichnet hiermit eine (Teil-) Korrelationslänge und $N_{avg}$ eine Anzahl von Mittelungen über (Teil-) Korrelationen.

Beide Signale, das Empfangssignal und das Pilotsequenzsignal, werden mit dem Doppelten der Chiprate abgetastet. Das gemäß obiger Gleichung (4) bestimmte Energieverzögerungsprofil pdp(k) wird schließlich aus der Energieverzögerungsprofil-Bestimmungseinheit 303 ausgegeben und der Datenübertragungspfad-Erfassungseinheit 304 zugeführt.

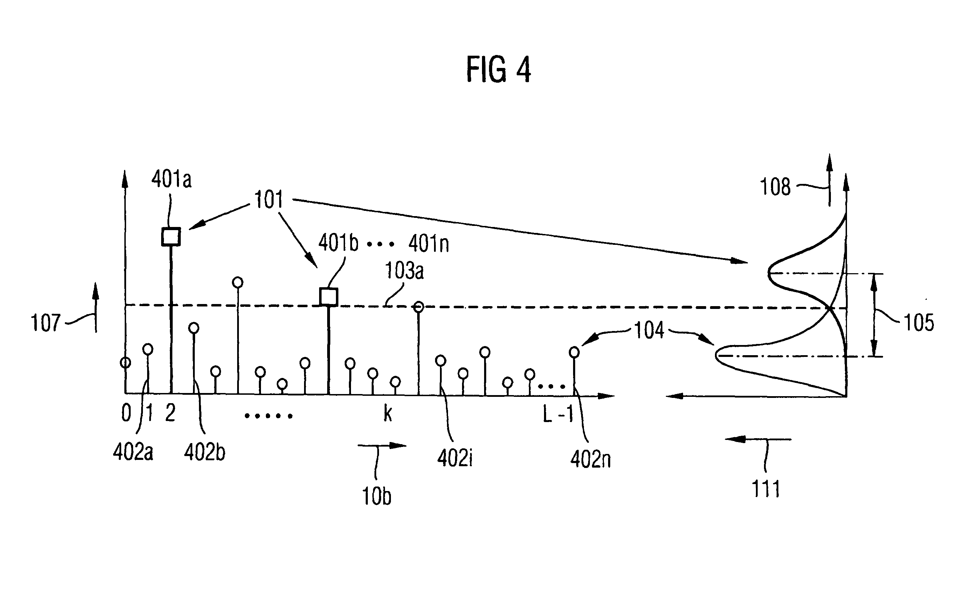

Erfindungsgemäß wird nun ein erster Schwellenwert 103a (unter Bezugnahme auf Fig. 4 untenstehend erläutert) in der Energieverzögerungsprofil-Bestimmungseinheit 303 niedrig angesetzt, so dass zwar eine Vorauswahl von Datenübertragungspfaden erfolgt ist, jedoch eine hohe Rate ungültiger Datenübertragungspfade erhalten wird.

In der Datenübertragungspfad-Erfassungseinheit werden die Spitzenwerte 401a-401n (Fig. 4) einer Empfangssignalenergie 107 aufsummiert, wobei Werte, die zur gleichen Verzögerungszeit (k) gehören, addiert werden. Hierbei kann eine Zahl $N_{occ}$ festgelegt werden, die angibt, wie oft ein Spitzenwert 401a-401n oberhalb des einstellbaren ersten Schwellenwerts 103a gelegen haben muss, damit die Position dieses Spitzenwerts als ein Datenübertragungspfad erkannt wird.

Ein entsprechendes Datenübertragungspfad-Positionssignal 306 wird dann aus der Datenübertragungspfad-Erfassungseinheit 304 ausgegeben und der Einstelleinrichtung 305 zugeführt. Die Einstelleinrichtung 305 wählt dann diejenigen Positionen aus dem Energieverzögerungsprofil aus, die mit den Fingern des Rake-Empfängers empfangen werden sollen.

Ein Rake-Finger entspricht somit einem Ausbreitungspfad. Die Rake-Finger sind werden in der Summationseinheit 310 der Verarbeitungseinrichtung 308 entsprechend eines von der Einstelleinrichtung 305 ausgegebenen Fingerpositionssignals 307 aufsummiert und als ein Ausgangssignal 311 ausgegeben.

In Fig. 4 ist ein Diagramm mit unterschiedlichen Spitzenwerten 401a-401n, welche Datenübertragungspfaden 101a-101n entsprechen, sowie Rausch-Spitzenwerten 402a-402n angegeben. Weiterhin zeigt das rechte Diagramm in Fig. 4 eine Funktion einer Wahrscheinlichkeitsverteilung 111 über einer Energie 108, wobei beispielhaft zwei Maxima gestellt sind. Das Maximum bei niedriger Energie 108 entspricht einem Rauschsignal 104, während das Maximum bei hoher Signalenergie den Datenübertragungspfaden 101 entspricht. Der Abstand der beiden Maxima kann als ein Signal-zu-Rauschabstand 105 bezeichnet werden. Bei herkömmlichen Verfahren, welche ausschließlich auf der Einstellung des ersten Schwellenwerts 103a beruhen, besteht ein Nachteil dahingehend, dass dann, wenn der Schwellenwert 103a zu niedrig eingestellt ist, eine Falschalarmrate in unzulässiger Weise ansteigt, während dann, wenn der Schwellenwert 103a zu hoch eingestellt ist, eine Erfassungsrate gültiger Datenübertragungspfade abnimmt.

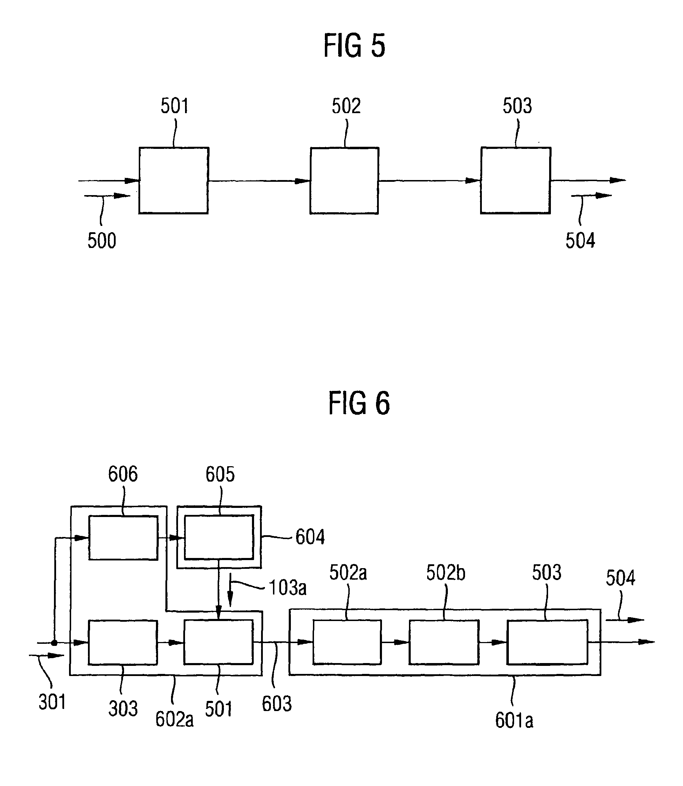

Erfindungsgemäß wird, wie nachstehend unter Bezugnahme auf Fig. 5 erläutert werden wird, der erst Schwellenwert 103a niedrig eingestellt, so dass zahlreiche Rausch-Spitzenwerte 402a-402n mit erfasst werden.

Fig. 5 zeigt ein Blockbild zur Durchführung eines Verfahrens gemäß einem bevorzugten Ausführungsbeispiel der Erfindung. Neben einer Spitzenwert-Erfassungseinrichtung 501 wird eine Datenanalyse-Datenverarbeitung in einer Datenübertragungspfadprofil-Bestimmungseinrichtung 502 und einer Filterungseinrichtung 503 ausgeführt.

Der Spitzenwert-Erfassungseinrichtung 501 wird ein durch das Energieverzögerungsprofil 300 bestimmtes Energieverzögerungsprofilsignal zugeführt. Dieses Signal wird in einer Vergleichseinheit der Spitzenwert-Erfassungseinrichtung 501 mit dem eingestellten, ersten Schwellenwert 103a verglichen. Dieser erste Schwellenwert 103a wird im Vergleich zu Verfahren nach dem Stand der Technik niedrig gewählt, wodurch eine Erfassungswahrscheinlichkeit für ungültige Pfade ansteigt, aber auch eine Erfassungswahrscheinlichkeit für gültige Pfade insgesamt zunimmt. Der Wert, der aus der Spitzenwert-Erfassungseinrichtung 501 ausgegeben und der Datenübertragungspfadprofil-Bestimmungseinrichtung 502 zugeführt wird, stellt somit auch nur eine Vorauswahl möglicher Datenübertragungspfadpositionen dar. In diesem ersten Schritt werden eine Energieverzögerungsprofil-Bestimmung (bzw. eine Energieverzögerungsprofilschätzung) und eine Spitzenwerterfassung periodisch durchgeführt, typischerweise mit einem zeitlichen Abstand des Rahmens oder mehrfacher Rahmen, d.h. im Abstand von 10 ms, jeweils 20 ms, ... etc..

Das von der Spitzenwert-Erfassungseinrichtung 501 ausgegebene Signal wird in der Datenübertragungspfadprofil-Bestimmungseinrichtung 502 weiter verarbeitet. In der Datenübertragungspfadprofil-Bestimmungseinrichtung werden die erfassten Spitzenwerte 401a-401n, wie auch die erfassten Rausch-Spitzenwerte 402a-402n für die letzten M-Perioden für jeweils gleiche Verzögerungen (k) nach der Methode eines laufenden Histogramms aufaddiert. Die Container dieses laufenden "Histogramms" entsprechen sämtlichen möglichen Verzögerungspositionen k(0...L-1). Sämtliche Positionen, die nicht zumindest $N_{occ}$ mal innerhalb dieses Beobachtungsfensters einer Länge M auftreten, werden auf 0 gesetzt, um hohe Rausch-Spitzenwerte oder unstabile Datenübertragungspfade zu unterdrücken.

Da die Anzahl erfasster Spitzenwerte typischerweise niedrig verglichen mit der Energieverzögerungsprofil-Länge ist ($N_{peak} \ll L$) muss dieses Datenübertragungspfadprofil-Histogramm nur für die Verzögerungspositionen berechnet werden, wo ein Pfad innerhalb der letzten M-PDP-Bestimmungsperioden aufgetreten ist.

Das Ergebnis dieses Histogramms wird anschließend mit einem zweiten Schwellenwert 103b verglichen. Sämtliche Positionen, die diesen zweiten Schwellenwert 103b überschreiten, werden weiterverarbeitet und aus der Datenübertragungspfadprofil-Bestimmungseinrichtung 502 ausgegeben.

Der zweite Schwellenwert 103b wird aus einer Abschätzung der Rauschumgebung abgeleitet. Da Rausch-Spitzenwerte statistisch unabhängige Ereignisse sind, treten diese üblicherweise an unterschiedlichen Positionen in aufeinanderfolgenden PDP-Bestimmungsschritten auf. Der zweite Schwellwert kann z.B. gemäß

$$S_{103b} = N_{occ} \cdot S_{103a} \qquad (7)$$

gewählt werden, wobei S die entsprechenden Schwellenwerte bezeichnet.

Die folgenden Gleichungen (8) und (9) ergeben somit Wahrscheinlichkeiten, dass Rausch-Spitzenwerte 401 erkannt werden, welche gegenüber dem herkömmlichen Verfahren, welches nur eine Spitzenwert-Erfassungseinrichtung 501 einsetzt, erhöht sind. Gleichzeitig ist die Erfassungswahrscheinlichkeit für gültige Datenübertragungspfade (Gleichung 9) gleich geblieben.

$$P_{502} = (P_{501})^{N_{occ}} \text{ für } 402 \qquad (8)$$

$$P_{502} = P_{501} \qquad \text{ für } 401 \qquad (9)$$

Aufgrund dieses Effektes werden die meisten Rausch-Spitzenwerte in der Stufe der Datenübertragungspfadprofil-Bestimmungseinrichtung 502 unterdrückt, während eine Erfassungswahrscheinlichkeit für den Spitzenwert 401, 401a-401n für das Nutz-Datenstromsignal erhalten bleibt.

Das Ausgangssignal der Datenübertragungspfadprofil-Bestimmungseinrichtung wird schließlich noch der Filterungseinrichtung 503 zugeführt, welche eine weitere Verbesserung des Signal-zu-Rauschverhältnisses bereitstellt.

In der Filterungseinrichtung 503 wird ein dritter Schwellenwert 103c bereitgestellt, welcher dazu dient, Nebenmaxima einer Korrelationsfiltereinrichtung, welche in der Energieverzögerungsprofil-Bestimmungseinheit 303 eingesetzt wird, zu unterdrücken. Die Filterungseinrichtung 503 ist insbesondere in Szenarien erforderlich, in welchen ein hohes Signal-zu-Rauschverhältnis aufrecht erhalten wird, wobei dann die Amplituden der Korrelations-Nebenkeulen in dem gleichen Bereich oder höher als die Rausch-Spitzenwerte sind.

Diese Nebenmaxima werden durch eine nicht optimale Orthogonalität von Abtastcode-Sequenzen der Länge $N_{corr}$ herbeigeführt und weisen typischerweise die gleiche Position in aufeinanderfolgenden PDP-Bestimmungsschritten auf, wobei diese um exakt einen Rahmen oder ein Mehrfaches von Rahmen voneinander beabstandet sind. Die Nebenmaxima können zur Erfassung von sogenannten (ungültigen) Schatten-Datenübertragungspfaden 101s führen, welche durch die ersten beiden Stufen 501 bzw. 502 nicht unterdrückt werden können.

Da die Seitenkeulen eines bestimmten Abtastcodes eine definierte Beziehung zu dem Haupt-Spitzenwert 401a-401n haben, kann der dritte Schwellenwert 103a aus der Amplitude der Position des stärksten Datenübertragungspfads bestimmt werden und mit einer Größe $\Delta_{103c}$ gemäß der folgenden Formel eingestellt werden

$$S_{103c} = \text{Max } \{401a, \dots, 401n\} \, / \, \Delta_{103c} \qquad (10)$$

Der Parameter $\Delta_{103c}$ hängt von den Einstellungen der PDP-Bestimmungseinrichtung $N_{corr}$ und $N_{avg}$ ab und kann vorab abgeleitet und in einer Tabelle abgespeichert werden. Als Ergebnis dieser dritten Stufe wird aus der Filterungseinrichtung 503 ein Fingerplatzierungssignal 504 ausgegeben, das die erfasste Datenübertragungspfade (beschrieben durch eine Position und in der Energie über M-Perioden akkumuliert) ausgibt. Die erfassten Datenübertragungspfade werden der in Fig. 3 beschriebenen Verarbeitungseinrichtung 308 als ein Fingerpositionssignal 307 zugeführt, so dass entsprechende Einstellungen der Rake-Finger und deren Aufsummierung vorgenommen werden können.

Um eine automatische Datenübertragungspfad-Erfassung durchzuführen, werden die Schwellenwerte 103a, 103b und 103c automatisch eingestellt und an die entsprechende Rauschumgebung angepasst. Die Einstellung der ersten und zweiten Schwellenwerte 103a und 103b kann aufgrund einer Abschätzung eines Mittelwerts $\mu_{pdp}$ und einer Varianz $\sigma^2_{pdp}$ oder einer Standardabweichung $\sigma_{pdp}$ der Rauschproben $pdp_{est}$ abgeleitet werden. Hierbei werden der Mittelwert $\mu_{pdp}$, die Varianz $\sigma^2_{pdp}$ und die Standardabweichung $\sigma_{pdp}$ aus einer Empfangssignalstärke erfasst, welche, wie unter Bezugnahme auf Fig. 6 erläutert werden wird, aus einer Empfangssignalstärke-Bestimmungseinheit 606 ausgegeben wird.

In den folgenden Formeln wird diese Größe der Empfangssignalstärke mit RSSI (Received Signal Strength Indicator, Empfangssignalstärke-Indikator) bezeichnet.

$$S_{103a} = a_1 \cdot \mu_{pdp} + b_1 \, \sigma_{pdp} \tag{11}$$

bzw.

$$S_{103a} = a_1 \, \mu_{pdp} + b_2 \, \sigma^2_{pdp} \tag{12}$$

Die Größen $\mu_{pdp}$, $\sigma_{pdp}$ und $\sigma^2_{pdp}$ werden aus dem Signal RSSI gemäß der folgenden Gleichungen bestimmt

$$RSSI = \frac{1}{N_{RSSI}} \sum_{n=0}^{N_{RSSI}} \left( r^2_{S(n)} + r^2_{Q(n)} \right) \tag{13}$$

$$\sigma_{pdp} = \frac{RSSI}{N_{corr}\sqrt{N_{avg}}} \tag{14}$$

$$\sigma^2_{pdp} = \frac{RSSI^2}{N^2_{corr} \cdot N_{avg}} \tag{15}$$

$$\mu_{pdp} = \frac{RSSI}{N_{corr}} \tag{16}$$

Da sich die Größe RSSI mit der Zeit ändern kann, müssen die Schwellenwerte periodisch aktualisiert werden. In dem Fall, dass eine Verteilung von Rauschproben einer Gaußschen Verteilungsfunktion entspricht, kann die Falscherfassungsrate $P_{502}$ durch den ersten Schwellenwert 103a gemäß Gleichung (11) exakt gesteuert werden. Der zweite Schwellenwert 103b kann auf der Grundlage des ersten Schwellenwerts 103a gewählt werden gemäß

$$S_{103b} = c \cdot S_{103a} \tag{17}$$

Im Folgenden werden weitere bevorzugte Ausführungsbeispiele der vorliegenden Erfindung beschrieben werden.

In den folgenden Figuren bezeichnet ein Bezugszeichen 601 eine Prozessoreinrichtung, welche einen Mehrzweckprozessor in Software aufweist. Dieser Mehrzweckprozessor kann beispielsweise in einem digitalen Signalprozessor oder einem Mikrocontroller implementiert werden.

Ein Bezugszeichen 602 kennzeichnet einen angepassten Hardware-Block, der für das entsprechende Ausführungsbeispiel speziell auszulegen ist. Der angepasste Hardware-Block 602 und die Prozessoreinrichtung 601 sind über einen Prozessorbus 603 verbunden.

Gemäß dem in Fig. 6 gezeigten Ausführungsbeispiel weist der angepasste Hardware-Block 602a eine Energieverzögerungsprofil-Bestimmungseinheit 303, eine Spitzenwert-Erfassungseinrichtung 501 und eine Empfangssignalstärken-Bestimmungseinheit 606 auf. Weiterhin kann der angepasste Hardware-Block 602a eine Schwellenwert-Bestimmungseinheit 605 umfassen, welche jedoch auch als Software-Modul auf dem Prozessor bereitgestellt werden kann. Das Empfangssignal 301 wird sowohl der Energieverzögerungsprofil-Bestimmungseinheit 303 als auch der Empfangssignalstärken-Bestimmungseinheit 606 zugeführt.

Aus der Empfangssignalstärken-Bestimmungseinheit 606 wird ein RSSI-Signal abgeleitet, um es der Spitzenwert-Bestimmungseinheit 605 zuzuführen. Zur Erfassung von Spitzenwerten in der Spitzenwert-Erfassungseinrichtung 501 wird zuerst der erste Schwellenwert 103a in der Schwellenwert-Bestimmungseinheit 605 bestimmt und der Spitzenwert-Erfassungseinrichtung zugeführt.

Es sei darauf hingewiesen, dass sich ein optimierter erster Schwellenwert 103a für jeden Energieverzögerungsprofil-Bestimmungsschritt ändern kann, so dass eine Aktualisierung dieses Parameters für jede einzelne Bestimmung notwendig sein kann, um ein optimales Betriebsverhalten zu erhalten.

Aus diesen Gründen ist es vorteilhaft, den ersten Schwellenwert 103a auf der Basis des RSSI-Signals, das gemäß Gleichung (14) obenstehend abgeleitet ist, einzustellen. Die mit Hilfe des eingestellten ersten Schwellenwerts 103a erfassten Spitzenwerte 401a-401n werden in einem Ausgangspufferspeicher (nicht gezeigt) gespeichert und dann über den Prozessorbus 603 der Prozessoreinrichtung 601 zugeführt.

Weiterhin muss der erste Schwellenwert bei einer Hardware-Berechnung des ersten Schwellenwerts 103a auch der Prozessoreinrichtung 601 zugeführt werden, da eine Berechnung des zweiten Schwellenwerts 103b auf dem ersten Schwellenwert 103a basiert ist, vgl. Gleichung (17) obenstehend.

Die Prozessoreinrichtung 601a weist eine Datenübertragungspfadprofileinheit 502a, eine Datenübertragungspfaderfassungseinheit 502b und eine Filterungseinrichtung 503 auf. Wie obenstehend unter Bezugnahme auf Fig. 5 beschrieben, wird auf diese Weise unter Zuhilfenahme der zweiten und dritten Schwellenwerte 103b und 103c ein Fingerplatzierungssignal 504 erzeugt und zu einer nachfolgenden Verarbeitungseinrichtung 308 ausgegeben.

Ein Vorteil des unter Bezugnahme auf Fig. 6 beschriebenen Ausführungsbeispiels besteht darin, dass eine Implementierung der ersten Stufe, d.h. der Spitzenwert-Erfassungseinrichtung 501 in dem angepassten Hardware-Block 602a die Menge an Daten, die über den Prozessorbus von dem angepassten Hardware-Block 602a zu der Prozessoreinrichtung 601a zu transferieren sind, beträchtlich verringert.

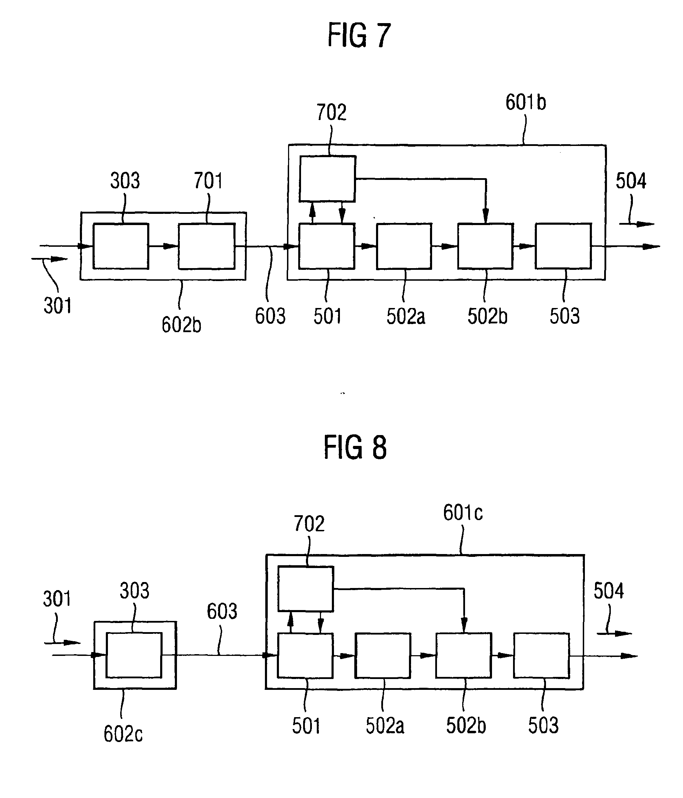

Fig. 7 zeigt ein weiteres bevorzugtes Ausführungsbeispiel der vorliegenden Erfindung. Eine Prozessoreinrichtung 601b ist mit einem angepassten Hardware-Block 602b über einen Prozessorbus 603 verbunden. Der angepasste Hardware-Block 602b des Ausführungsbeispiels der Fig. 7 weist neben der Energieverzögerungsprofil-Bestimmungseinheit eine Spitzenwert-Sortiereinheit auf, wobei das Empfangssignal 301 jeweils zuerst der Energieverzögerungsprofil-Bestimmungseinheit 303 zugeführt wird.

Das Ausgangssignal der Energieverzögerungsprofil-Bestimmungseinheit 303 wird der Spitzenwert-Sortiereinheit 701 zugeführt, in welcher eine Sortierung der Spitzenwerte 401a-401n bezüglich einer Empfangssignalenergie 107 bereitgestellt wird.

In dem in Fig. 7 gezeigten Ausführungsbeispiel wird eine Spitzenwerterfassung in einer in der Prozessoreinrichtung 601b bereitgestellten Spitzenwert-Erfassungseinrichtung 501 durchgeführt. Der erste Schwellenwert 103a muss in dem in Fig. 7 gezeigten Ausführungsbeispiel nun im Gegensatz zu dem in Fig. 6 gezeigten Ausführungsbeispiel nicht im Voraus bereitgestellt werden, sondern wird durch eine Schwellenwert-Einstelleinheit 702 eingestellt. Aufgrund einer fest eingestellten Anzahl von erfassten Spitzenwerten, welche in ihrer Größe durch die Spitzenwert-Sortiereinheit 701 sortiert sind, ist gewährleistet, dass immer die Spitzenwerte 401a-401n mit der größten Empfangssignalenergie 107 verarbeitet werden.

Der durch die Schwellenwert-Einstelleinheit bereitgestellte erste Schwellenwert 103a wird auch der Datenübertragungspfaderfassungseinheit 502b zugeführt, in welcher der zweite Schwellenwert 103b in Abhängigkeit von dem ersten Schwellenwert 103a eingestellt wird. Die übrigen Blöcke der Prozessoreinrichtung 601b entsprechen in ihrer Funktionsweise den in Fig. 6 gezeigten Blöcken und werden hier nicht mehr beschrieben.

Fig. 8 zeigt ein drittes bevorzugtes Ausführungsbeispiel der vorliegenden Erfindung. In Fig. 8 sind in einem angepassten Hardware-Block 602c außer der Energieverzögerungsprofil-Bestimmungseinheit 303 keine weiteren Funktionsblöcke enthalten. Sämtliche weiteren Funktionen werden in der Prozessoreinrichtung 601c durchgeführt, um das korrekte Fingerplatzierungssignal 504 bereitzustellen.

Das Ausführungsbeispiel gemäß Fig. 8 eröffnet die größte Flexibilität für eine Schwellenwert-Berechnung, erfordert aber einen größeren Ausgangspufferspeicher (nicht gezeigt) für den angepassten Hardware-Block 602c als eine Energieverzögerungsprofil-Bestimmungseinheit 303.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

Bezugszeichenliste

In den Figuren bezeichnen gleiche Bezugszeichen gleiche oder funktionsgleiche Komponenten oder Schritte.

| | |
|---|---|
| 100 | Datenstromempfänger |
| 101, 101a- 101n | Datenübertragungspfad |
| 101a | direkter Datenübertragungspfad |
| 101b, 101c | Indirekte Datenübertragungspfade |
| 101s | Schattenübertragungspfad |
| 102 | Datenstrom |
| 103a | Erster Schwellenwert |
| 103b | Zweiter Schwellenwert |
| 103c | Dritter Schwellenwert |
| 104 | Rauschsignal |
| 105 | Signal-zu-Rauschabstand |
| 106 | Korrelationsverzögerung (k) |
| 107 | Empfangssignalenergie |
| 108 | Energie |
| 109 | Erste Empfangseinrichtung |
| 111 | Wahrscheinlichkeitsverteilung |
| 200 | Datenstromsender |
| 201 | Erste Antenne, Sendeeinrichtung |
| 202 | Zweite Antenne, Sendeeinrichtung |
| 203 | Datenrahmen |
| 203a... 203i... 203N | Datenrahmen |
| 204a... 204i... 204n | Schlitze |
| 205 | Erste Symbole |
| 206 | Zweite Symbole |

EP 1 447 914 B1

| | |
|---|---|
| 300, PDP | Energieverzögerungsprofil |
| 301 | Erstes Empfangssignal |
| 303 | Energieverzögerungsprofil-Bestimmungseinheit |
| 304 | Datenübertragungspfad-Erfassungseinheit |
| 305 | Einstelleinrichtung |
| 306, 504 | Datenübertragungspfad-Positionssignal |
| 307 | Fingerpositionssignal |
| 308 | Verarbeitungseinrichtung |
| 309a- 309N | Rake-Finger |
| 310 | Summationseinheit |
| 311 | Ausgangssignal |
| 401, 401a-401n | Spitzenwert |
| 402, 402a-402n | Rausch-Spitzenwerte |
| 500 | Energieverzögerungsprofilsignal |
| 501 | Spitzenwert-Erfassungseinrichtung |
| 502 | Datenübertragungspfadprofil-Bestimmungseinrichtung |
| 502a | Datenübertragungspfadprofileinheit |
| 502b | Datenübertragungspfaderfassungseinheit |
| 503 | Filterungseinrichtung |
| 601a- 601c | Prozessoreinrichtung |
| 602a- 602c | Angepasster Hardware-Block |
| 603 | Prozessorbus |
| 604 | Hardware-Block als Teil von 602a oder Prozessoreinrichtung (Teil von 601a) |
| 605 | Schwellenwert-Bestimmungseinheit |
| 606 | Empfangssignalstärke-Bestimmungseinheit |
| 701 | Spitzenwert-Sortiereinheit |
| 702 | Schwellenwert-Einstelleinheit |
| P | Wahrscheinlichkeit |
| S | Schwellenwert |

**Patentansprüche**

1. Vorrichtung zum Empfang eines über mindestens einen Datenübertragungspfad (101, 101a, 101b, 101c) übertragbaren Datenstroms (102), mit:

   a) einem Datenstromempfänger (100) zum Empfang des Datenstroms (102) über mindestens einen der Datenübertragungspfade (101, 101a, 101b, 101c);
   b) einer Energieverzögerungsprofil-Bestimmungseinheit (303) zur Bestimmung mindestens eines Energieverzögerungsprofils (300) des mindestens einen Datenübertragungspfads;
   c) einer Spitzenwert-Erfassungseinrichtung (501) zur Erfassung mindestens eines Spitzenwerts (401a-401n) in dem bestimmten Energieverzögerungsprofil (300);
   d) einer Datenübertragungspfadprofil-Bestimmungseinrichtung (502) zur Bestimmung eines Datenübertragungspfadprofils des mindestens einen Datenübertragungspfads (101);
   e) einer Filterungseinrichtung (503) zur Unterdrückung von ungültigen Datenübertragungspfadsignalen (101s) und zur Ausgabe eines Fingerplatzierungssignals (504); und
   f) einer Einstelleinrichtung (305) zur Einstellung von Datenübertragungspfaden (101), welche einer Datenübertragung zugeordnet sind, in Abhängigkeit von dem Fingerplatzierungssignal (504), wobei
   g) eine Datenübertragungspfad-Erfassung basierend auf einem dreistufigen Schwellenwert-Einstellverfahren durchgeführt wird, indem die Spitzenwert-Erfassungseinrichtung (501) und die Datenübertragungspfadprofil-Bestimmungseinrichtung (502) derart zusammenwirken, dass der mindestens eine Spitzenwert (401a-401n) in Abhängigkeit von einem an eine Rauschumgebung adaptierbaren Schwellenwert bestimmbar ist;

   g1) wobei bei dem dreistufigen Schwellenwert-Einstellverfahren das Energieverzögerungsprofil (300) mit einem ersten Schwellenwert (103a) verglichen wird, welcher in Abhängigkeit von einer Rauschumgebung eingestellt ist, in der Datenübertragungspfadprofil-Bestimmungseinrichtung (502) ein zweiter Schwellenwert (103b) vorgegeben wird, mit welchem die nach Art eines laufenden Histogramms aufsummierten Spitzenwerte (401a-401n) verglichen werden, wobei der zweite Schwellenwert (103b) in Abhängigkeit von dem ersten Schwellenwert (103a), multipliziert mit einem konstanten Faktor ($N_{occ}$), bereitgestellt wird, und Nebenmaxima eines in der Filterungseinrichtung (503) angeordneten Korrelationsfilters zur Unterdrückung von ungültigen Datenübertragungspfadsignalen (101s) mit einem dritten Schwellenwert (103c) verglichen werden, wobei der dritte Schwellenwert (103c) in Abhängigkeit von der Position des stärksten Datenübertragungspfads (101, 101a-101c) bereitgestellt wird, und wobei
   h) die Spitzenwerterfassung durch die Spitzenwert-Erfassungseinrichtung (501) in einem zeitlichen Abstand, der einem Datenrahmen (203) oder einem Vielfachen von Datenrahmen (203) entspricht, periodisch ausgeführt wird.

2. Vorrichtung nach Anspruch 1,
   **dadurch gekennzeichnet,**
   **dass** die Spitzenwert-Erfassungseinrichtung (501) eine Vergleichseinheit aufweist, um das Energieverzögerungsprofil (300) mit dem ersten Schwellenwert (103a) zu vergleichen.

3. Vorrichtung nach Anspruch 1,
   **dadurch gekennzeichnet,**
   **dass** der Datenstromempfänger (100) Datenströme (102) über mindestens zwei unterschiedliche Datenübertragungspfade (101a, 101b) aufnimmt.

4. Vorrichtung nach Anspruch 1,
   **dadurch gekennzeichnet,**
   **dass** die Spitzenwert-Erfassungseinrichtung (501) eine Schwellenwert-Einstelleinheit aufweist, mit welcher der erste Schwellenwert (103a) adaptiv einstellbar ist.

5. Vorrichtung nach Anspruch-1,
   **dadurch gekennzeichnet,**
   **dass** die Datenübertragungspfadprofil-Bestimmungseinrichtung (502) eine Datenübertragungspfadprofileinheit (502a) zur Aufsummation von gewichteten Spitzenwerten (401a-401n) und eine Datenübertragungspfaderfassungseinheit (502b) zur Erfassung eines gültigen Datenübertragungspfads aufweist.

6. Vorrichtung nach Anspruch 1,

**dadurch gekennzeichnet,**
**dass** die Energieverzögerungsprofil-Bestimmungseinheit (303) zusammen mit einer Spitzenwert-Sortiereinheit (701) in einem gemeinsamen angepassten Hardware-Block (602) bereitgestellt ist.

7. Vorrichtung nach Anspruch 1,
**dadurch gekennzeichnet,**
**dass** in einem angepassten Hardware-Block (602) eine Empfangssignalstärke-Bestimmungseinheit (606) zur Bestimmung der Empfangssignalstärke des Empfangssignals (301) bereitgestellt ist.

8. Verfahren zum Empfangen eines über mindestens einen Datenübertragungspfad (101, 101a, 101b, 101c) übertragenen Datenstroms (102), mit den folgenden Schritten:

   a) Empfangen des Datenstroms (102) über den mindestens einen Datenübertragungspfad (101, 101a, 101b, 101c) in einem Datenstromempfänger (100);
   b) Bestimmen mindestens eines Energieverzögerungsprofils (300) des mindestens einen Datenübertragungspfads mittels einer Energieverzögerungsprofil-Bestimmungseinheit (303) ;
   c) Erfassen mindestens eines Spitzenwerts (401a-401n) in dem bestimmten Energieverzögerungsprofil (300) mittels einer Spitzenwert-Erfassungseinrichtung (501);
   d) Bestimmen eines Datenübertragungspfadprofils des mindestens einen Datenübertragungspfads (101, 101a, 101b, 101c) in einer Datenübertragungspfadprofil-Bestimmungseinrichtung (502);
   e) Unterdrücken von ungültigen Datenübertragungspfadsignalen (101s) und Ausgeben eines Fingerplatzierungssignals (504) durch eine Filterungseinrichtung (503); und
   f) Einstellen von Datenübertragungspfaden (101, 101a, 101b, 101c), welche einer Datenübertragung zugeordnet werden, in Abhängigkeit von dem Fingerplatzierungssignal (504) mittels einer Einstelleinrichtung (305), wobei
   g) eine Datenübertragungspfad-Erfassung basierend auf einem dreistufigen Schwellenwert-Einstellverfahren durchgeführt wird, indem die Spitzenwert-Erfassungseinrichtung (501) und die Datenübertragungspfadprofil-Bestimmungseinrichtung (502) derart zusammenwirken, dass der mindestens eine Spitzenwert (401a-401n) in Abhängigkeit von einem an eine Rauschumgebung adaptierbaren Schwellenwert bestimmbar ist;

   g1) wobei bei dem dreistufigen Schwellenwert-Einstellverfahren das Energieverzögerungsprofil (300) mit einem ersten Schwellenwert (103a) verglichen wird, welcher in Abhängigkeit von einer Rauschumgebung eingestellt ist, in der Datenübertragungspfadprofil-Bestimmungseinrichtung (502) ein zweiter Schwellenwert (103b) vorgegeben wird, mit welchem die nach Art eines laufenden Histogramms aufsummierten Spitzenwerte (401a-401n) verglichen werden, wobei der zweite Schwellenwert (103b) in Abhängigkeit von dem ersten Schwellenwert (103a), multipliziert mit einem konstanten Faktor ($N_{occ}$), bereitgestellt wird, und Nebenmaxima eines in der Filterungseinrichtung (503) angeordneten Korrelationsfilters zur Unterdrückung von ungültigen Datenübertragungspfadsignalen (101s) mit einem dritten Schwellenwert (103c) verglichen werden, wobei der dritte Schwellenwert (103c) in Abhängigkeit von der Position des stärksten Datenübertragungspfads (101, 101a-101c) bereitgestellt wird, und wobei
   h) die Spitzenwerterfassung durch die Spitzenwert-Erfassungseinrichtung (501) in einem zeitlichen Abstand, der einem Datenrahmen (203) oder einem Vielfachen von Datenrahmen (203) entspricht, periodisch ausgeführt wird.

9. Verfahren nach Anspruch 8,
**dadurch gekennzeichnet,**
**dass** in der Spitzenwert-Erfassungseinrichtung (501) der erste Schwellenwert (103a) variabel eingestellt wird.

10. Verfahren nach Anspruch 9,
**dadurch gekennzeichnet,**
**dass** der erste Schwellenwert (103a) in Abhängigkeit von einem Mittelwert, einer Varianz und/oder einer Standardabweichung von Rausch-Spitzenwerten (402a-402n) eingestellt wird.

11. Verfahren nach Anspruch 9,
**dadurch gekennzeichnet,**
**dass** der erste Schwellenwert (103a) an eine Rauschumgebung derart angepasst wird, dass eine Vorauswahl möglicher Datenübertragungspfad-Positionen bereitgestellt wird.

12. Verfahren nach Anspruch 8,

**dadurch gekennzeichnet,**
**dass** die Datenübertragungspfadprofil-Bestimmungseinrichtung (502) eine vorgebbare Anzahl (M) von vorangehenden Perioden abspeichert und die erfassten Spitzenwerte (401a-401n) nach Art eines laufenden Histogramms aufsummiert.

**13.** Verfahren nach Anspruch 12,
**dadurch gekennzeichnet,**
**dass** die Datenübertragungspfadprofil-Bestimmungseinrichtung (502) die vorgebbare Anzahl (M) von vorangehenden Perioden abspeichert und die erfassten Spitzenwerte (401a-401n) vor einer Aufsummierung mit einer Empfangssignalstärke gewichtet.

**14.** verfahren nach Anspruch 8 oder 13,
**dadurch gekennzeichnet,**
**dass** die zeitlichen Summationsstellen bei einer Aufsummierung der erfassten Spitzenwerte (401a-401n) durch die Datenübertragungspfadprofil-Bestimmungseinrichtung (502) Verzögerungspositionen (k = 0, 1, ..., L-1) einer Korrelationsfunktion entsprechen.

**15.** Verfahren nach Anspruch 8 oder 14, **dadurch gekennzeichnet,**
**dass** Datenübertragungspfadpositionen, die weniger als eine vorbestimmte Anzahl ($N_{occ}$) von Malen auftreten, auf Null gesetzt werden.

**16.** Verfahren nach Anspruch 8,
**dadurch gekennzeichnet,**
**dass** der zweite Schwellenwert (103b) in Abhängigkeit von einem vorhandenen Rauschen eingestellt wird.


**Claims**

**1.** Apparatus for receiving a data stream (102) which can be transmitted via at least one data transmission path (101, 101a, 101b, 101c), having

a) data stream receiver (100) for receiving the data stream (102) via at least one of the data transmission paths (101, 101a, 101b, 101c);
b) an energy delay profile determining unit (303) for determining at least one energy delay profile (300) of the at least one data transmission path;
c) a peak value detecting device (501) for detecting at least one peak value (401a-401n) in the determined energy delay profile (300);
d) a data transmission path profile determining device (502) for determining a data transmission path profile of the at least one data transmission path (101);
e) a filter device (503) for suppressing invalid data transmission path signals (101s) and for outputting a finger placement signal (504); and
f) a setting device (305) for setting data transmission paths (101), which are allocated to a data transmission, in dependence upon the finger placement signal (504), wherein
g) data transmission path detection is performed based on a three-stage threshold value setting method, in that the peak value detecting device (501) and the data transmission path profile determining device (502) co-operate such that the at least one peak value (401a-401n) can be determined in dependence upon a threshold value which can be adapted to a noise environment;

g1) wherein in the three-stage threshold value setting method the energy delay profile (300) is compared with a first threshold value (103a) which is set in dependence upon a noise environment, a second threshold value (103b) is predetermined in the data transmission path profile determining device (502) and the peak values (401a-401n) summed in the manner of a running histogram are compared with the second threshold value, wherein the second threshold value (103b) is provided in dependence upon the first threshold value (103a) multiplied by a constant factor ($N_{occ}$) and secondary maxima of a correlation filter disposed in the filter device (503) for suppressing invalid data transmission path signals (101s) are compared with a third threshold value (103c), wherein the third threshold value (103c) is provided in dependence upon the position of the strongest data transmission path (101, 101a-101c), and wherein
h) the peak value detection is performed periodically by the peak value detecting device (501) in a time interval which corresponds to a data frame (203) or a multiple of data frames (203).

2. Apparatus as claimed in Claim 1, **characterised in that** the peak value detecting device (501) comprises a comparison unit in order to compare the energy delay profile (300) with the first threshold value (103a).

3. Apparatus as claimed in Claim 1, **characterised in that** the data stream receiver (100) receives data streams (102) via at least two different data transmission paths (101a, 101b) .

4. Apparatus as claimed in Claim 1, **characterised in that** the peak value detecting device (501) comprises a threshold value setting unit, by means of which the first threshold value (103a) can be adaptively set.

5. Apparatus as claimed in Claim 1, **characterised in that** the data transmission path profile determining device (502) comprises a data transmission path profile unit (502a) for summing weighted peak values (401a-401n) and a data transmission path detecting unit (502b) for detecting a valid data transmission path.

6. Apparatus as claimed in Claim 1, **characterised in that** the energy delay profile determining unit (303) is provided together with a peak value sorting unit (701) in a common adapted hardware block (602).

7. Apparatus as claimed in Claim 1, **characterised in that** a received signal strength determining unit (606) is provided in an adapted hardware block (602) for determining the received signal strength of the received signal (301).

8. Method for receiving a data stream (102) which is transmitted via at least one data transmission path (101, 101a, 101b, 101c), having the following steps:

   a) receiving the data stream (102) via the at least one data transmission path (101, 101a, 101b, 101c) in a data stream receiver (100);
   b) determining at least one energy delay profile (300) of the at least one data transmission path by means of an energy delay profile determining unit (303);
   c) detecting at least one peak value (401a-401n) in the determined energy delay profile (300) by means of a peak value detecting device (501);
   d) determining a data transmission path profile of the at least one data transmission path (101, 101a, 101b, 101c) in a data transmission path profile determining device (502);
   e) suppressing invalid data transmission path signals (101s) and outputting a finger placement signal (504) by a filter device (503); and
   f) setting data transmission paths (101, 101a, 101b, 101c), which are allocated to a data transmission, in dependence upon the finger placement signal (504) by means of a setting device (305), wherein
   g) data transmission path detection is performed based on a three-stage threshold value setting method, in that the peak value detecting device (501) and the data transmission path profile determining device (502) co-operate such that the at least one peak value (401a-401n) can be determined in dependence upon a threshold value which can be adapted to a noise environment;

   g1) wherein in the three-stage threshold value setting method the energy delay profile (300) is compared with a first threshold value (103a) which is set in dependence upon a noise environment, a second threshold value (103b) is predetermined in the data transmission path profile determining device (502) and the peak values (401a-401n) summed in the manner of a running histogram are compared with the second threshold value, wherein the second threshold value (103b) is provided in dependence upon the first threshold value (103a) multiplied by a constant factor ($N_{occ}$) and secondary maxima of a correlation filter disposed in the filter device (503) for suppressing invalid data transmission path signals (101s) are compared with a third threshold value (103c), wherein the third threshold value (103c) is provided in dependence upon the position of the strongest data transmission path (101, 101a-101c), and wherein
   h) the peak value detection is performed periodically by the peak value detecting device (501) in a time interval which corresponds to a data frame (203) or a multiple of data frames (203).

9. Method as claimed in Claim 8, **characterised in that** the first threshold value (103a) is variably set in the peak value detecting device (501).

10. Method as claimed in Claim 9, **characterised in that** the first threshold value (103a) is set in dependence upon an average value, a variance and/or a standard deviation of noise peak values (402a-402n).

**11.** Method as claimed in Claim 9, **characterised in that** the first threshold value (103a) is adapted to a noise environment such that provision is made to pre-select possible data transmission path positions.

**12.** Method as claimed in Claim 8, **characterised in that** the data transmission path profile determining device (502) stores a predeterminable number (M) of preceding periods and sums the detected peak values (401a-401n) in the manner of a running histogram.

**13.** Method as claimed in Claim 12, **characterised in that** the data transmission path profile determining device (502) stores the predeterminable number (M) of preceding periods and weights the detected peak values (401a-401n) prior to summing with a received signal strength.

**14.** Method as claimed in Claim 8 or 13, **characterised in that** the temporal summing points correspond to delay positions (k = 0, 1, ..., L-1) of a correlation function during summing of the detected peak values (401a-401n) by the data transmission path profile determining device (502).

**15.** Method as claimed in Claim 8 or 14, **characterised in that** data transmission path positions which occur less than a predetermined number ($N_{occ}$) of times are set to zero.

**16.** Method as claimed in Claim 8, **characterised in that** the second threshold value (103b) is set in dependence upon an existing noise.

### Revendications

**1.** Dispositif destiné à recevoir un flux de données (102) via au moins une voie de transmission de données (101, 101a, 101b, 101c), doté de :

a) un récepteur de flux de données (100) destiné à réceptionner le flux de données (102) via au moins une des voies de transmission de données (101, 101a, 101b, 101c) ;

b) une unité de détermination d'un profil de décélération d'énergie (303) destinée à définir au moins un profil de décélération d'énergie (300) d'au moins une voie de transmission de données ;

c) un dispositif de détection des valeurs de crête (501) destiné à détecter au moins une valeur de crête (401a-401n) dans le profil de décélération d'énergie déterminé (300) ;

d) un dispositif de détermination de profil de voie de transmission de données (502) destiné à déterminer un profil de voie de transmission de données d'au moins une voie de transmission de données (101) ;

e) un dispositif de filtration (503) destiné à la suppression de signaux de voie de transmission de données non valides (101s) et à l'émission d'un signal de placement des touches (504) ; et

f) un dispositif de réglage (305) destiné à régler des voies de transmission de données (101), qui sont attribuées à une transmission de données, en fonction du signal de placement des touches (504) ;

g) une détection de voie de transmission de données étant réalisée, basée sur un procédé de réglage de la valeur de seuil à trois niveaux, le dispositif de détection de valeurs de crête (501) et le dispositif de détermination de profil de voie de transmission de données (502) interagissant de telle sorte qu'au moins une valeur de crête (401a-401n) peut être définie en fonction d'une valeur de seuil adaptable à un environnement bruyant ;

g1) le profil de décélération d'énergie (300) étant comparé, dans le procédé de réglage à trois niveaux de la valeur de seuil, avec une première valeur de seuil (103a), qui est réglée en fonction d'un environnement bruyant, une seconde valeur de seuil (103b) étant prédéfinie dans le dispositif de détermination de profil de voie de transmission de données (502), avec laquelle sont comparées les valeurs de crête (401a-401n) totalisées à la manière d'un histogramme courant, la seconde valeur de seuil (103b) étant mise à disposition en fonction de la première valeur de seuil (103a), multipliée par un facteur constant ($N_{occ}$), et des maxima secondaires d'un filtre de corrélation disposés dans le dispositif de filtration (503) pour supprimer les signaux de voie de transmission de données non valides (101s) étant comparés avec une troisième valeur de seuil (103c), la troisième valeur de seuil (103c) étant mise à disposition en fonction de la position de la voie de transmission de données (101, 101a-101c) la plus forte ; et

h) la détection de valeurs de crête étant effectuée périodiquement par le dispositif de détection de valeurs de crête (501) à intervalles de temps correspondant à une trame de données (203) ou à une multitude de trames de données (203).

**2.** Dispositif selon la revendication 1, **caractérisé par le fait que** le dispositif de détection des valeurs de crête (501) présente une unité de comparaison permettant de comparer le profil de décélération d'énergie (300) avec la première valeur de seuil (103a).

**3.** Dispositif selon la revendication 1, **caractérisé par le fait que** le récepteur de flux de données (100) réceptionne des flux de données (102) via au moins deux voies de transmission de données (101a, 101b).

**4.** Dispositif selon la revendication 1, **caractérisé par le fait que** le dispositif de détection des valeurs de crête (501) présente une unité de réglage de la valeur de seuil, avec laquelle la première valeur de seuil (103a) peut être réglée de manière adaptée.

**5.** Dispositif selon la revendication 1, **caractérisé par le fait que** le dispositif de détermination de profil de voie de transmission de données (502) présente une unité de profil de voie de transmission de données (502a) destinée à totaliser les valeurs de crête pondérées (401a-401n) et une unité de détection de voie de transmission de données (502b) destinée à détecter une voie de transmission de données valide,

**6.** Dispositif selon la revendication 1, **caractérisé par le fait que** l'unité de détermination d'un profil de décélération d'énergie (303), conjointement avec une unité de tri des valeurs de crête (701), est mise à disposition dans un bloc matériel (602) commun adapté.

**7.** Dispositif selon la revendication 1, **caractérisé par le fait que** une unité de détermination du volume du signal de réception (606) destinée à déterminer le volume du signal de réception (301) est mise à disposition dans un bloc matériel (602) adapté.

**8.** Procédé destiné à recevoir un flux de données (102) transmis au moins via une voie de transmission de données (101, 101a, 101b, 101c), comprenant les étapes suivantes :

a) réception du flux de données (102) via au moins une voie de transmission de données (101, 101a, 101b, 101c) dans un récepteur de flux de données (100) ;
b) détermination d'au moins un profil de décélération d'énergie (300) d'au moins une voie de transmission de données au moyen d'une unité de détermination d'un profil de décélération d'énergie (303) ;
c) détection d'au moins une valeur de crête (401a-401n) dans le profil de décélération d'énergie (300) déterminé au moyen d'un dispositif de détection de valeurs de crête (501) ;
d) détermination d'un profil de voie de transmission de données d'au moins une voie de transmission de données (101, 101a, 101b, 101c) dans un dispositif de détermination de profil de voie de transmission de données (502) ;
e) suppression de signaux de voie de transmission de données non valides (101s) et émission d'un signal de placement des touches (504) par le biais d'un dispositif de filtration (503) ; et
f) réglage de voies de transmission de données (101, 101a, 101b, 101c) qui sont affectées à une transmission de données en fonction du signal de placement des touches (504) au moyen d'un dispositif de réglage (305) ;
g) une détection de voies de transmission de données étant réalisée, basée sur un procédé de réglage de la valeur de seuil à trois niveaux, le dispositif de détection de valeurs de crête (501) et le dispositif de détermination de profil de voie de transmission de données (502) interagissant de telle sorte qu'au moins une valeur de crête (401a-401n) peut être définie en fonction d'une valeur de seuil adaptable à un environnement bruyant ;

g1) le profil de décélération d'énergie (300) étant comparé, dans le procédé de réglage à trois niveaux de la valeur de seuil, avec une première valeur de seuil (103a), qui est réglée en fonction d'un environnement bruyant, une seconde valeur de seuil (103b) étant prédéfinie dans le dispositif de détermination de profil de voie de transmission de données (502), avec laquelle sont comparées les valeurs de crête (401a-401n) totalisées à la manière d'un histogramme courant, la seconde valeur de seuil (103b) étant mise à disposition en fonction de la première valeur de seuil (103a), multipliée par un facteur constant ($N_{occ}$), et des maxima secondaires d'un filtre de corrélation disposés dans le dispositif de filtration (503) pour supprimer les signaux de voie de transmission de données non valides (101s) étant comparés avec une troisième valeur de seuil (103c), la troisième valeur de seuil (103c) étant mise à disposition en fonction de la position de la voie de transmission de données (101, 101a-101c) la plus forte ; et
h) la détection de valeurs de crête étant effectuée périodiquement par le dispositif de détection de valeurs de crête (501) à intervalles de temps correspondant à une trame de données (203) ou à une multitude de trames de données (203).

9. Procédé selon la revendication 8, **caractérisé par le fait que** la première valeur de seuil (103a) est définie de manière variable dans le dispositif de détection de valeurs de crête (501).

10. Procédé selon la revendication 9, **caractérisé par le fait que** la première valeur de seuil (103a) est définie en fonction d'une valeur moyenne, d'une variance et/ou d'un écart standard de valeurs de crête de bruits (402a-402n).

11. Procédé selon la revendication 9, **caractérisé par le fait que** la première valeur de seuil (103a) est adaptée à un environnement bruyant de telle manière qu'une présélection de positions possibles de voies de transmission de données est mise à disposition.

12. Procédé selon la revendication 8, **caractérisé par le fait que** le dispositif de détermination de profil de voie de transmission de données (502) stocke un nombre prédéfini (M) de périodes préalables et totalise les valeurs de crête (401a-401n) détectées à la manière d'un histogramme courant.

13. Procédé selon la revendication 12, **caractérisé par le fait que** le dispositif de détermination de profil de voie de transmission de données (502) stocke le nombre prédéfini (M) de périodes préalables et les valeurs de crête (401a-401n) détectées sont pondérées avant une totalisation avec un volume du signal de réception.

14. Procédé selon la revendication 8 ou 13, **caractérisé par le fait que** les points de sommation temporels correspondent lors d'une totalisation des valeurs de crête détectées (401a-401n) par le dispositif de détermination de profil de voie de transmission de données (502) à des positions de décélération ($k = 0, 1, ..., L-1$) d'une fonction de corrélation.

15. Procédé selon la revendication 8 ou 14, **caractérisé par le fait que** des positions de voie de transmission de données, qui apparaissent moins d'un nombre de fois prédéfini ($N_{occ}$), sont mises à zéro.

16. Procédé selon la revendication 8, **caractérisé par le fait que** la seconde valeur de seuil (103b) est fixée en fonction d'un bruit présent.

20

# FIG 1

# FIG 2

# FIG 3

# FIG 4

EP 1 447 914 B1

# FIG 5

# FIG 6

## FIG 7

## FIG 8